# EUROPÄISCHE PATENTSCHRIFT

(11) **EP 1 519 652 B1**
(45) Veröffentlichungstag und Bekanntmachung des Hinweises auf die Patenterteilung: **08.03.2006**
(21) Anmeldenummer: 03763584.4
(22) Anmeldetag: 02.07.2003
(51) Int. Cl.: A21B 3/02, A21B 1/44

(54) **TÜR ZUM VERSCHLIESSEN EINES GARRAUMES EINES GARGERÄTES**
DOOR FOR CLOSING A COOKING COMPARTMENT OF A COOKING APPLIANCE
PORTE POUR FERMER LE COMPARTIMENT D'UN APPAREIL DE CUISSON

(30) Priorität: 10.07.2002 DE 10231059
(43) Veröffentlichungstag der Anmeldung: 06.04.2005
(73) Patentinhaber: Rational AG, 86899 Landsberg/Lech (DE)
(72) Erfinder: RABE, Herrmann, 86899 Landsberg am Lech (DE)
(74) Vertreter: Weber-Bruls, Dorothée
(86) Internationale Anmeldenummer: PCT/DE2003/002198
(87) Internationale Veröffentlichungsnummer: WO 2004/006680

(56) Entgegenhaltungen:
- DE-A- 3 316 221
- GB-A- 1 534 215
- US-A- 5 657 743

## Beschreibung

Die vorliegende Erfindung betrifft eine Tür zum Verschließen eines Garraumes eines Gargerätes, z. B. Kombi-Dämpfers zur Behandlung mit Heißluft und/oder Dampf, mit und ohne oberhalb des unteren Schenkels eines im Gargerät eingefahrenen Hordengestellwagens, der ein Dichtblech zur Abdichtung der Garraumöffnung im Bereich eines Hordengestellwagen-Holms aufweist.

Aus der DE 33 16 221 A1 ist eine Tür zum Verschließen eines Garraums eines Gargeräts bekannt, wobei in den Garraum auch ein Hordengestellwagen einfahrbar ist.

Hordengestellwagen, das heißt feste Einheiten aus Tellerhordengestellen und Transportwagen, mit einem Hordengestellwagen-Holm werden zum Garen von Speisen und Lebensmitteln in der eingangs beschriebenen Weise in den Garraum z. B. eines Kombi-Dämpfers eingefahren. Zum Schließen der Garraumtür hinter dem eingefahrenen Hordengestellwagen ist diese im unteren Bereich mit einer inneren Ausnehmung versehen. Zur Abdichtung der Garraumöffnung ist der Hordengestellwagen mit einem Dichtblech versehen. Eine gattungsgemäße Tür ergibt sich bei Verwendung eines Hordengestellwagens, wie er aus dem Prospekt der Firma Rational AG "Original Rational Zubehör" vom März 2002 beispielsweise auf Seite 6 gezeigt ist. Die dort gezeigten Hordengestellwagen weisen im Bereich des Hordengestellwagen-Holms ein Dichtblech auf, das zur Abdichtung der Garraumöffnung dient.

Wenn sich kein Hordengestellwagen in dem Kombi-Dämpfer befindet und dieser z. B. vorgeheizt oder gereinigt werden soll, so muß das Dichtblech des Hordengestellwagens durch ein anderes Abdichtungselement ersetzt werden. Dies geschieht im Stand der Technik mittels eines an der Garraumtür einhängbaren Ersatzdichtbleches. Dies weist jedoch den Nachteil auf, daß es leicht vergeßbar und umständlich zu handhaben ist.

Der vorliegenden Erfindung liegt somit die Aufgabe zugrunde, die gattungsgemäße Tür derart weiterzubilden, daß die obengenannten Nachteile beseitigt, zumindest aber reduziert werden.

Erfindungsgemäß wird diese Aufgabe bei der gattungsgemäßen Tür dadurch gelöst, daß die Tür mit einem unverlierbar angeordneten Ersatzdichtblech versehen ist, das zwischen einer Ruhelage mit in das Gargerät eingefahrenem Hordengestellwagen und einer Betriebslage ohne in das Gargerät eingefahrenem Hordengestellwagen relativ zum Garraum bewegbar ist, wobei das Ersatzdichtblech in seiner Ruhelage in der Tür und in seiner Betriebslage als Ersatz für das Dichtblech des Hordengestellwagens zwischen einer Garraumdichtung und einer Türdichtung angeordnet ist.

Gemäß einer besonderen Ausftihrungsform der Erfindung kann vorgesehen sein, daß das Ersatzdichtblech verschiebbar ist.

Insbesondere kann dabei vorgesehen sein, daß das Ersatzdichtblech in der Ruhelage parallel und benachbart zum äußeren Türrahmen angeordnet ist.

Vorteilhafterweise wird das Ersatzdichtblech mittels zweier Kulissenbahnen auf jeder Seite seitlich geführt.

Alternativ kann vorgesehen sein, daß das Ersatzdichtblech schwenkbar ist.

Insbesondere kann dabei vorgesehen sein, daß das Ersatzdichtblech um mindestens 180 Grad schwenkbar ist.

Zweckmäßigerweise ist das Ersatzdichtblech in der Ruhelage parallel und benachbart zum äußeren Türrahmen angeordnet.

Vorteilhafterweise ist das Ersatzdichtblech mittels zweier Schwenklager auf jeder Seite schwenkbar.

Insbesondere kann dabei vorgesehen sein, daß die beiden Schwenklager auf jeder Seite vertikal im Abstand angeordnet sind.

Gemäß einer weiteren besonderen Ausführungsform der Erfindung kann vorgesehen sein, daß eine öffenbare Innenscheibe und eine Außenscheibe vorgesehen sind und das Ersatzdichtblech in der Ruhelage zwischen der Innen- und der Außenscheibe angeordnet ist.

Insbesondere kann dabei vorgesehen sein, daß das Ersatzdichtblech um eine horizontale Drehachse schwenkbar ist.

Schließlich erstreckt sich die Drehachse günstigerweise unterhalb der Innenscheibe.

Der Erfindung liegt die überraschende Erkenntnis zugrunde, daß durch die unverlierbare und zwischen einer Ruhe- und einer Betriebslage bewegbare Anordnung des Ersatzdichtbleches das Vorsehen eines Ersatzdichtbleches bei Fehlen eines Hordengestellwagens nicht so leicht vergeßbar-und leicht-handhabbar ist- Außerdem ist das Ersatzdichtblech unverlierbar.

Weitere Merkmale und Vorteile der Erfindung ergeben sich aus den Ansprüchen und der nachstehenden Beschreibung, in der drei Ausführungsbeispiele anhand der schematischen Zeichnungen im einzelnen erläutert sind. Dabei zeigt:
- Figur 1: ein Gargerät mit eingefahrenem Hordengestellwagen und einer Tür gemäß einer ersten besonderen Ausführungsform der Erfindung in Schnittansicht;
- Figur 2: das Gargerät von Figur 1 ohne eingefahrenen Hordengestellwagen in Schnittansicht;

- Figur 3: ein Gargerät mit eingefahrenem Hordengestellwagen und einer Tür gemäß einer zweiten besonderen Ausführungsform der Erfindung in Schnittansicht;
- Figur 4: das Gargerät von Figur 3 ohne eingefahrenen Hordengestellwagen in Schnittansicht;
- Figur 5: ein Gargerät mit eingefahrenem Hordengestellwagen und einer Tür gemäß einer dritten besonderen Ausfiihrungsform der Erfindung in Schnittansicht; und
- Figur 6: das Gargerät von Figur 5 ohne eingefahrenem Hordengestellwagen in Schnittansicht.

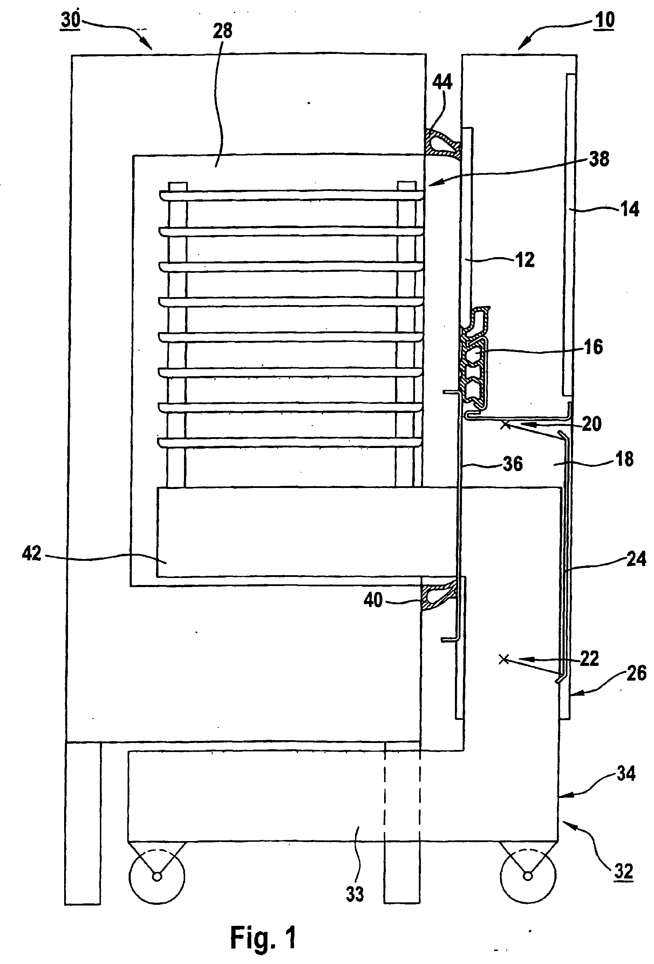

Die in der Figur 1 gezeigte Tür 10 weist in ihrem oberen Bereich eine Innenscheibe 12 sowie eine Außenscheibe 14 auf. Im unteren Bereich der Innenscheibe 12 ist eine kombinierte Innenscheiben- und Hordengestellwagen-Dichtblech-Dichtung 16 angeordnet. Unterhalb der Innenscheibe 12 und der Außenscheibe 14 befinden sich in einer inneren Ausnehmung 18 auf beiden Seiten jeweils vertikal voneinander beabstandete Schwenklager, von denen lediglich zwei mit den Bezugszeichen 20 und 22 gekennzeichnete Schwenklager zu sehen sind. Die Schwenklager dienen zur schwenkbaren Lagerung eines Ersatzdichtbleches 24. In der Figur 1 befindet sich das Ersatzdichtblech 24 in seiner Ruhelage, in der es benachbart und parallel zu einem äußeren Türrahmen 26 angeordnet ist. ,

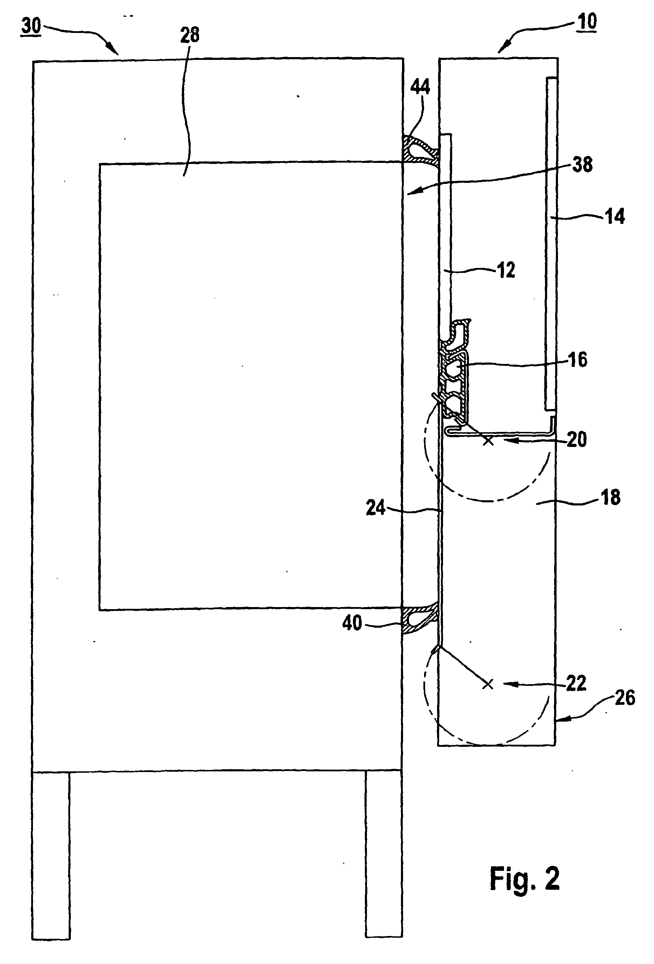

Die Tür 10 verschließt den Garraum 28 eines Gargerätes 30, das als ein Standgargerät ausgebildet ist. In den Garraum 28 ist ein Hordengestellwagen 32 oberhalb des unteren Schenkels 33 seines zum Gargerät 30 offenen U-förmigen Hordengestellwagen-Holms 34 eingefahren. Der Hordengestellwagen 32 weist ein Dichtblech 36 zur Abdichtung der Garraumöffnung 38 im Bereich des Hordengestelltwagen-Holms 34 auf. Die Abdichtung erfolgt dabei in Verbindung mit einer Garraumdichtung 40, die sich unterhalb des oberen Schenkels 42 des Hordengestellwagen-Holms 34 horizontal in die Zeichenebene der Figur 1 hinein erstreckt. Eine entsprechende Garraumdichtung 44 ist im oberen Bereich der Innenscheibe 12 vorgesehen. In der Figur 2 ist die Tür 10 von Figur 1 ebenfalls, aber ohne eingefahrenen Hordengestellwagen geschlossen. Es ist zu erkennen, wie durch Schwenken des Ersatzdichtbleches 24 um mehr als 180 Grad aus seiner Ruhelage in seine Betriebslage selbiges an die Stelle des Dichtbleches 36 des Hordengestellwagens 32 von Figur 1 getreten ist.

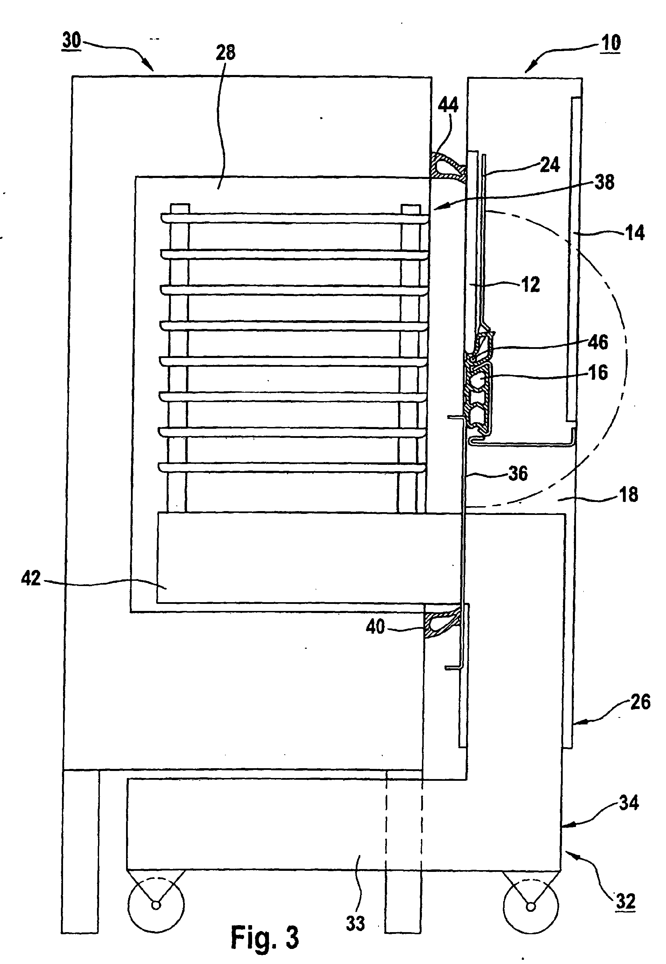

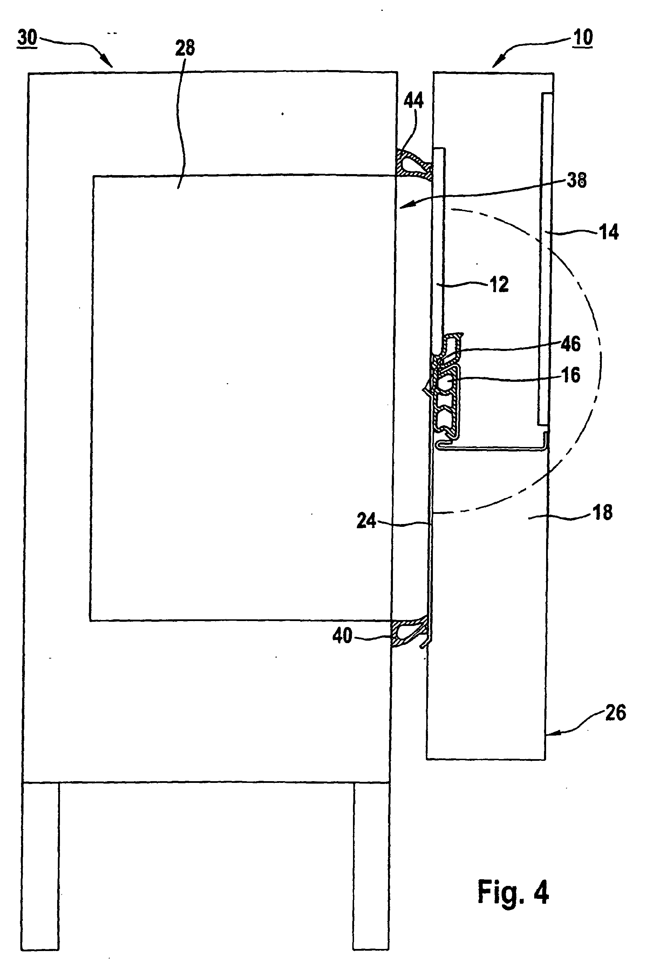

Die Figur 3 zeigt eine Ausführungsform der erfindungsgemäßen Tür 10, bei der ein Ersatzdichtblech 24 um eine unterhalb einer Innenscheibe 12 angeordnete, sich horizontal in die Zeichenebene der Figur 3 hinein erstreckende Drehachse 46 aus einer Ruhelage, in der sich das Ersatzdichtblech 24 im wesentlichen parallel zur Innenscheibe 12 zwischen selbiger und einer Außenscheibe 14 befindet, um ca. 180 Grad nach unten in eine Betriebslage schwenkbar ist, in der es an die Stelle des Dichtbleches 36 eines Hordengestellwagens 32 tritt (siehe Figur 4). Zum Schwenken des Ersatzdichtbleches 24 aus seiner Ruhelage muß die Innenscheibe 12 im geöffneten Zustand der Tür 10 z. B. nach oben geschwenkt werden.

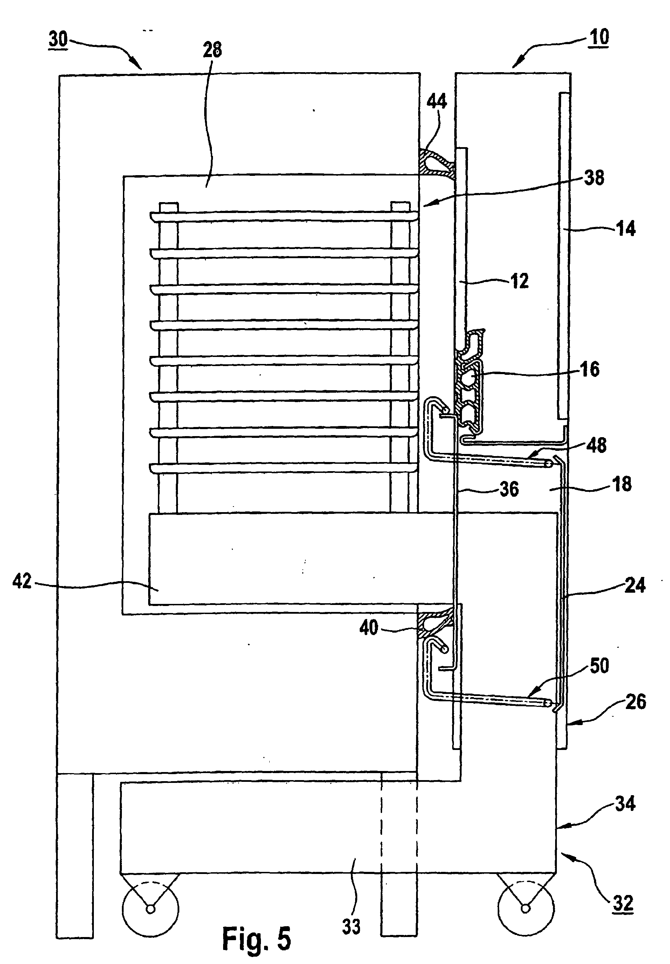

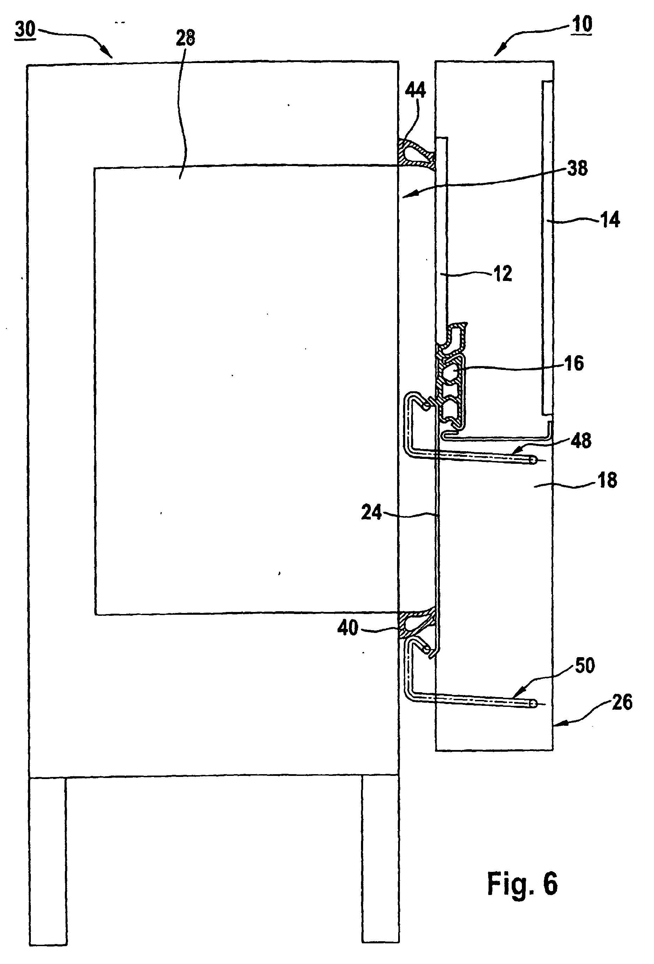

In den Figuren 5 und 6 ist eine Ausführungsform der erfindungsgemäßen Tür 10 gezeigt, in der ein Ersatzdichtblech 24 auf beiden Seiten über jeweils zwei Kulissenbahnen, von denen lediglich zwei bei 48 und 50 gezeigt sind, geführt. Dadurch läßt sich das Ersatzdichtblech 24 zwischen einer Ruhelage, in der es sich parallel und benachbart zu einem äußeren Türrahmen 26 befindet (siehe Figur 5), und einer Betriebslage, in der es an die Stelle eines Dichtbleches 36 eines Hordengestellwagens 32 tritt (siehe Figur 6), bewegen.

In allen beschriebenen Ausflihrungsformen ist das Ersatzdichtblech unverlierbar angebracht und auf einfache Weise aus einer Ruhelage in eine Betriebslage und umgekehrt bringbar.

## Patentansprüche

1. Tür (10) zum Verschließen eines Garraumes (28) eines Gargerätes (30), z. B. Kombi-Dämpfers zur Behandlung mit Heißluft und/oder Dampf, mit und ohne oberhalb des unteren Schenkels (33) eines im Gargerät (30) eingefahrenen Hordengestellwagens (32), der ein Dichtblech (36) zur Abdichtung der Garraumöffnung (38) im Bereich eines Hordengestellwagen-Holms (34) aufweist,
**dadurch gekennzeichnet, daß**
die Tür (10) mit einem unverlierbar angeordneten Ersatzdichtblech (24) versehen ist, das zwischen einer Ruhelage mit in das Gargerät (30) eingefahrenem Hordengestellwagen (32) und einer Betriebslage ohne in das Gargerät (30) eingefahrenem Hordengestellwagen (32) relativ zum Garraum (28) bewegbar ist, wobei das Ersatzdichtblech (24) in seiner Ruhelage in der Tür (10) und in seiner Betriebslage als Ersatz für das Dichtblech (36) des Hordengestellwagens (32) zwischen einer Garraumdichtung (40) und einer Türdichtung (16) angeordnet ist.

2. Tür (10) nach Anspruch 1, **dadurch gekennzeichnet, daß** das Ersatzdichtblech (24) verschiebbar ist.

3. Tür (10) nach Anspruch 2, **dadurch gekennzeichnet, daß** das Ersatzdichtblech (24) in der Ruhelage parallel und benachbart zum äußeren Türrahmen (26) angeordnet ist.

4. Tür (10) nach Anspruch 2 oder 3, **dadurch gekennzeichnet, daß** das Ersatzdichtblech (24) mittels zweier Kulissenbahnen (48, 50) auf jeder Seite seitlich geführt wird.

5. Tür (10) nach Anspruch 1, **dadurch gekennzeichnet, daß** das Ersatzdichtblech (24) schwenkbar ist.

6. Tür (10) nach Anspruch 5, **dadurch gekennzeichnet, daß** das Ersatzdichtblech (24) um mindestens 180 Grad schwenkbar ist.

7. Tür (10) nach Anspruch 5 oder 6, **dadurch gekennzeichnet, daß** das Ersatzdichtblech (24) in der Ruhelage parallel und benachbart zum äußeren Türrahmen (26) angeordnet ist.

8. Tür (10) nach Anspruch 5, 6 oder 7, **dadurch gekennzeichnet, daß** das Ersatzdichtblech (24) mittels zweier Schwenklager (20, 22) auf jeder Seite schwenkbar ist.

9. Tür (10) nach Anspruch 8, **dadurch gekennzeichnet, daß** die beiden Schwenklager (20, 22) auf jeder Seite vertikal im Abstand angeordnet sind.

10. Tür (10) nach Anspruch 5 oder 6, **dadurch gekennzeichnet, daß** eine öffenbare Innenscheibe und eine Außenscheibe (14) vorgesehen sind und das Ersatzdichtblech (24) in der Ruhelage zwischen der Innen- (12) und der Außenscheibe (14) angeordnet ist.

11. Tür (10) nach Anspruch 10, **dadurch gekennzeichnet, daß** das Ersatzdichtblech (24) um eine horizontale Drehachse (46) schwenkbar ist.

12. Tür (10) nach Anspruch 11, **dadurch gekennzeichnet, daß** die Drehachse (46) sich unterhalb der Innenscheibe (12) erstreckt.

## Claims

1. Door (10) for sealing a cooking compartment (28) of a cooking appliance (30), for example of a combination steamer for hot-air and/or steam treatment, with and without above the lower side branch (33) of a tray rack cart (32) which is inserted in the cooking appliance (30) and has a sealing plate (36) for sealing off the cooking compartment opening (38) in the region of a tray rack cart cross member (34), **characterized in that** the door (10) is provided with a captively mounted replacement sealing plate (24), which is moveable relative to the cooking compartment (28) between a rest position, with the tray rack cart (32) inserted in the cooking appliance (30), and an operating position, without the tray rack cart (32) inserted in the cooking appliance (30), the replacement sealing plate (24) being arranged in the door (10) in its rest position and being arranged between a cooking compartment seal (40) and a door seal (16) as a replacement for the sealing plate (36) of the tray rack cart (32) in its operating position.

2. Door (10) according to Claim 1, **characterized in that** the replacement sealing plate (24) is displaceable.

3. Door (10) according to Claim 2, **characterized in that** the replacement sealing plate (24), in the rest position, is disposed parallel and adjacent to the outer door frame (26).

4. Door (10) according to Claim 2 or 3, **characterized in that** the replacement sealing plate (24) is laterally guided by means of two slideways (48, 50) on each side.

5. Door (10) according to Claim 1, **characterized in that** the replacement sealing plate (24) is pivotable.

6. Door (10) according to Claim 5, **characterized in that** the replacement sealing plate (24) is pivotable by at least 180 degrees.

7. Door (10) according to Claim 5 or 6, **characterized in that** the replacement sealing plate (24), in the rest position, is disposed parallel and adjacent to the outer door frame (26).

8. Door (10) according to Claim 5, 6 or 7, **characterized in that** the replacement sealing plate (24) is pivotable by means of two pivot bearings (20, 22) on each side.

9. Door (10) according to Claim 8, **characterized in that** the two pivot bearings (20, 22) on each side are vertically spaced.

10. Door (10) according to Claim 5 or 6, **characterized in that** an openable inner plate and an outer plate (14) are provided and the replacement sealing plate (24), in the rest position, is disposed between the inner (12) and the outer plate (14).

11. Door (10) according to Claim 10, **characterized in that** the replacement sealing plate (24) is pivotable about a horizontal rotation axis (46).

12. Door (10) according to Claim 11, **characterized in that** the rotation axis (46) extends beneath the inner plate (12).

## Revendications

1. Porte (10) pour fermer un compartiment de cuisson (28) d'un appareil de cuisson (30), par exemple un cuiseur à vapeur ou étuveur combiné, pour le traitement à l'air chaud et/ou à la vapeur, avec et sans, au-dessus de la branche inférieure (33) d'un chariot de bâti à claies (32) introduit dans l'appareil de cuisson (30), présentant une tôle d'étanchéité (36) pour fermer hermétiquement l'ouverture de compartiment de cuisson (38) dans la zone d'un montant de chariot de bâti à claies (34),
**caractérisée en ce que**
la porte (10) est munie d'une tôle d'étanchéité remplaçable (24), disposée de façon imperdable, déplaçable par rapport au compartiment de cuisson (28), entre une position de repos, avec un chariot de bâti à claies (32) introduit dans l'appareil de cuisson (30), et une position de fonctionnement, sans que le chariot de bâti à claies (32) soit introduit dans l'appareil de cuisson (30), la tôle d'étanchéité remplaçable (24), à sa position de repos, étant disposée dans la porte (10) et, à sa position de fonctionnement, en remplacement de la tôle d'étanchéité (36) du chariot de bâti à claies (32), étant disposée, entre un joint d'étanchéité de compartiment de cuisson (40) et un joint d'étanchéité de porte (16).

2. Porte (10) selon la revendication 1, **caractérisée en ce que** la tôle d'étanchéité remplaçable (24) est déplaçable

3. Porte (10) selon la revendication 2, **caractérisée en ce que** la tôle d'étanchéité remplaçable (24), à la position de repos, est disposée parallèlement et au voisinage du cadre de porte extérieur (26).

4. Porte (10) selon la revendication 2 ou 3, **caractérisée en ce que** la tôle d'étanchéité remplaçable (24) est guidée latéralement, au moyen de deux pistes à coulisse (48, 50), disposées de chaque côté.

5. Porte (10) selon la revendication 1, **caractérisée en ce que** la tôle d'étanchéité remplaçable (24) est pivotante.

6. Porte (10) selon la revendication 5, **caractérisée en ce que** la tôle d'étanchéité remplaçable (24) est susceptible de pivoter d'au moins 180 degrés.

7. Porte (10) selon la revendication 5 ou 6, **caractérisée en ce que** la tôle d'étanchéité remplaçable (24), en position de repos, est disposée parallèlement et au voisinage du cadre de porte extérieur (26).

8. Porte (10) selon la revendication 5, 6 ou 7, **caractérisée en ce que** la tôle d'étanchéité remplaçable (24) est susceptible de pivoter au moyen de deux paliers de pivotement (20, 22) situés de chaque côté.

9. Porte (10) selon la revendication 8, **caractérisée en ce que** les deux paliers de pivotement (20, 22) disposés de chaque côté, sont disposés verticalement et à distance.

10. Porte (10) selon la revendication 5 ou 6, **caractérisée en ce qu'**un panneau intérieur ouvrable et un panneau extérieur (14) sont prévus, et la tôle d'étanchéité remplaçable (24), à la position de repos, est disposée, entre le panneau intérieur (12) et le panneau extérieur (14).

11. Porte (10) selon la revendication 10, **caractérisée en ce que** la tôle d'étanchéité remplaçable (24) est susceptible de pivoter autour d'un axe de rotation (46) horizontal.

12. Porte (10) selon la revendication 11, **caractérisée en ce que** l'axe de rotation (46) s'étend au-dessous du panneau intérieur (12).
